# EUROPÄISCHE PATENTSCHRIFT

(11) **EP 2 936 084 B1**
(45) Veröffentlichungstag und Bekanntmachung des Hinweises auf die Patenterteilung: **24.03.2021**
(21) Anmeldenummer: 13799066.9
(22) Anmeldetag: 03.12.2013
(51) Int. Cl.: G01F 11/28

(54) **VORRICHTUNG ZUM BEFÖRDERN EINES BETRIEBSSTOFFES**
DEVICE FOR CONVEYING A FUEL
DISPOSITIF D'ACHEMINEMENT DE MATIÈRE

(30) Priorität: 20.12.2012 DE 102012224054
(43) Veröffentlichungstag der Anmeldung: 28.10.2015
(73) Patentinhaber: Henkel AG & Co. KGaA, 40589 Düsseldorf (DE)
(72) Erfinder: HENKE, Andreas, 27367 Hellwege (DE)
(86) Internationale Anmeldenummer: PCT/EP2013/075387
(87) Internationale Veröffentlichungsnummer: WO 2014/095349

(56) Entgegenhaltungen:
- WO-A1-96/27551
- WO-A1-2009/044224
- DE-A1- 2 409 128
- DE-A1-102010 060 114
- DE-A1-102011 001 276
- JP-A- S 578 417
- US-A- 3 827 610

## Beschreibung

Die vorliegende Erfindung betrifft eine Vorrichtung zum Befördern eines Betriebsstoffes, insbesondere eine Granulates. Derartige Vorrichtungen kommen insbesondere für industrielle Anwendungen zum Einsatz, um Betriebsstoffe, wie beispielsweise Granulate, zu ihren Einsatzorten, wie beispielsweise Verarbeitungsstationen oder Applikationsgeräte zu befördern. Eine beispielhafte Anwendung liegt im Bereich der Verpackungstechnik. Bekannte Vorrichtungen eignen sich hier insbesondere zur Beschickung von Applikationsgeräten mit Schmelzklebstoffen in Form von Granulat. Dieses Granulat wird dann zur Applikation von besagten Applikationsgeräten aufgeschmolzen.

Beispielweise zeigt die EP2241867A1 eine Vorrichtung zum Befüllen von Verarbeitungsstationen mit einem pumpfähigen Betriebsstoff, wobei einem Zentraltank für den Betriebsstoff zwei oder mehr Übergabekammern zugeordnet sind, welchen jeweils einer der Verarbeitungsstationen zugeordnet sind, derart, dass der Betriebsstoff zunächst vom Zentraltank in die jeweilige Übergabekammer und von dort zur der jeweils zugehörigen Verarbeitungsstation förderbar ist, wobei zur Beförderung des Betriebsstoffes zu den Verarbeitungsstationen eine auf die Übergabekammer gerichtete Druckmitteldüse angeordnet ist

Weiterer Stand der Technik ist aus der WO 2009/044224 A1 bekannt.

Aufgabe der Erfindung ist die Bereitstellung einer verbesserten Vorrichtung zum Befördern eines Betriebsstoffes.

Diese Aufgabe wird durch die Merkmale der Ansprüche 1 und 8 gelöst. Vorteilhafte Ausgestaltungen der Erfindung sind mit den Unteransprüchen angegeben.

Grundgedanke der Erfindung ist der Einsatz einer Vorrichtung zum Befördern eines Betriebsstoffes, wie beispielsweise eines Granulats, aufweisend einen Füllraum mit einem Eingang zur Befüllung des Füllraums mit dem Granulat, einem Förderabschnitt zum Befördern des Granulats über einen Ausgang, einem Übergang von Füllraum zum Förderabschnitt, der zwischen einer offenen und einer geschlossenen Position wechselbar ist, um insbesondere in der offenen Position des Übergangs eine Übergabemöglichkeit des Granulats von Füllraum zum Förderabschnitts zu ermöglichen, wobei das durch den Eingang in den Füllraum gefüllte Granulat in der offener Position des Übergangs mittels eines gasförmigen Transportmediums, vorzugsweise Druckluft, in den Förderabschnitt überführt wird, und wobei das Granulat von dem Förderabschnitt mittels eines gasförmigen Transportmediums, vorzugsweise Druckluft, aus dem Ausgang ausgegeben wird.

Als Betriebsstoff kann wie oberhalb angesprochen insbesondere ein Granulat zum Einsatz kommen. Insbesondere kann unter einem Granulat ein körniger bis pulverförmiger, insbesondere leicht schüttbarer Feststoff verstanden werden. In einer alternativen Ausführungsform können jedoch optional auch allgemein pumpfähige Betriebsstoffe befördert werden, die sich mit einem gasförmigen Transportmedium mischen lassen.

Besonders vorteilhaft hat sich der Einsatz eines Betriebsstoffes in Granulatform erwiesen, da ein Granulat einfach mittels eines gasförmigen Transportmediums beförderbar ist. Beispielsweise kommt ein Schmelzklebstoff in Granulatform zum Einsatz, der insbesondere in der Verpackungstechnik zur Herstellung von Kartonagen oder ähnlichen Verpackungsmaterialien zur Anwendung kommt.

Bevorzugt ist ein Vorratbehälter oder ein Vorratstank vorgesehen, in welchem der Betriebsstoff vor der Beförderung durch die Vorrichtung lagert. Der Vorratsbehälter kann dabei auch Teil der Vorrichtung selbst sein.

Der Füllraum kann insbesondere zur Vorportionierung des Betriebsstoffes und/oder als Zwischenspeicher dienen. Insbesondere kann der Füllraum hierfür Mittel zum Erfassen der Menge und oder der Masse an bevorratetem und über den Eingang zugeführten Betriebsstoff aufweisen. Der Betriebsstoff kann beispielsweise mittels eines gasförmigen Transportmediums durch den Eingang in den Füllraum gelangen. Hier ist insbesondere eine Befüllung, als auch eine Einsaugung des Betriebsstoffes denkbar. Der Eingang ist vorzugsweise im oberen Bereich des Füllraums vorgesehen. Zur Weiteren Beförderung des Betriebsstoffes ist der Förderabschnitt vorgesehen, welcher sich vorzugsweise an den unteren Bereich des Füllraums anschließt, der von dem Füllraum durch besagten Übergang getrennt ist. Der Förderabschnitt kann dabei auch ein Abschnitt oder Teil vorzugsweise des unteren Bereichs des Füllraums sein, der durch denn Übergang von dem Füllraum abtrennbar ist. der Übergang ist wie oberhalb angesprochen zumindest zwischen einer offenen und einer geschlossenen Position wechselbar, wobei in der offenen Position eine Kommunikation zwischen Füllraum und Förderabschnitt möglich ist und insbesondere eine Überführung des im Füllraum vorgesehenen Betriebsstoffes in den Förderabschnitt möglich ist. In der geschlossenen Position wieder wird vorzugsweise eine derartige Abtrennung des Förderabschnittes vom Füllraum ermöglicht, dass insbesondere keine Überführung des im Füllraum vorgesehenen Betriebsstoffes in den Förderabschnitt möglich ist.

Der Füllraum ist mit einer ersten Zuführung für ein gasförmiges Transportmedium ausgestattet, welches vorzugsweise im oberen Bereich des Füllturms angeordnet ist. Zur Überführung des Betriebsstoffes in den Förderabschnitt, welcher sich vorzugsweise an den unteren Bereich des Füllraums anschließt, ist der Eingang vorzugsweise geschlossen und der Übergang steht in der offenen Position. Mittels Zuführung des besagten gasförmigen Transportmediums ist der Betriebsstoff sodann in den Förderabschnitt überführbar.

Weiter ist der Betriebsstoff von besagtem Förderabschnitt mittels eines gasförmigen Transportmediums, welches sowohl dasselbe gasförmige Transportmedium wie das oberhalb beschriebene Transportmedium sein kann, als auch ein weiteres und/oder unterschiedliches, aus dem Ausgang ausgebbar.

Besagter Ausgang der Vorrichtung kann dabei insbesondere zum Anschluss etwaiger Peripherieanwendungen an die Vorrichtung genutzt werden. Denkbare Peripherieanwendungen sind dabei beispielsweise Auftrags- oder Verarbeitungsstationen, Weichen, Zwischenspeicher oder weitere Vorratsbehälter. Der Förderabschnitt ist und wobei das Granulat von dem Förderabschnitt mittels eines gasförmigen Transportmediums (vorzugsweise Druckluft) aus dem Ausgang ausgegeben wird.

Als gasförmiges Transportmedium kann sowohl die Überführung, als auch für die Ausgabe vorzugsweise Druckluft zum Einsatz kommen. Gleichwohl kann sich auch der Einsatz eines anderen Gases oder Gasgemisches als sinnvoll erweisen. Insbesondere für reaktive Betriebsstoffe kann sich zudem der Einsatz eines Inertgases als zweckmäßig erweisen.

In der bevorzugten Ausführungsform wird das gasförmige Transportmedium durch eine Druckbeaufschlagung des Füllraums und/oder des Förderabschnittes zur Überführung bzw. zur Ausgabe eingebracht. Gleichwohl kann sich in einer Ausgestaltung der Erfindung die Verwendung eines Vakuumsystems als zweckmäßig erweisen, bei der das gasförmige Transportmedium mittels einer Vakuumbeaufschlagung insbesondere des Förderabschnittes, zur Überführung des Betriebsstoff vom Füllraum in den Förderabschnitt und/oder einem Einsatz des Vakuums an dem Ausgang, zur Ausgabe des Betriebsstoffes aus dem Förderabschnitt aus dem Ausgang.

Vorzugsweise beinhaltet die Vorrichtung zudem eine Steuereinheit oder ist an eine Steuereinheit angeschlossen. Die Steuereinheit kann hierbei insbesondere zur Steuerung der einzelnen Komponenten zum Einsatz kommen. Denkbar ist insbesondere eine Steuerung des Übergangs derart, dass sich selbiger für eine Befüllung des Füllraumes durch den Eingang mit dem Betriebsstoff in der geschlossenen Position befindet, so dass eine Kommunikation zwischen Füllraum und Förderabschnitt nicht möglich ist. Zudem kann bei der Befüllung die Öffnung einer Abluftöffnung des Füllraums vorgesehen werden, um einen Staudruck im Füllraum zu vermeiden und das gasförmige Transportmedium bei der Befüllung abführen zu können. Insbesondere sobald über gegebenenfalls zum Einsatz kommende und an die Steuereinheit angeschlossene Füllstands- oder Füllmengensensoren ein Signal melden, dass ein bestimmter Füllstand oder eine bestimmte Füllmenge an Granulat im Füllraum erreicht ist, kann alternativ oder zusätzlich eine Schließung des Eingangs und/oder der Abluftöffnung sowie ein versetzen des Übergangs in die offene Position vorgesehen werden, um ein Übergeben des Betriebsstoffes von dem Füllraum zum Förderabschnitt zu ermöglichen. Hierzu wird vorzugsweise zusätzlich die Zuführung des gasförmigen Transportmediums für die Übergabe des Betriebsstoffes gesteuert. Insbesondere zeitlich kann zudem die Zugabe eines gasförmigen Transportmediums zur Ausgabe des Betriebsstoffes aus dem Ausgang gesteuert werden.

Insbesondere durch den Einsatz eines gasförmigen Transportmediums für die Übergabe des Betriebsstoffes von dem Füllraum zum Förderabschnitt können viele Vorteile erreicht werden. Im Vergleich zu herkömmlichen Vorrichtungen sind nun auch völlig unterschiedliche Bauformen denkbar, da der Betriebsstoff nun nicht mehr dem Förderabschnitt ausschließlich mittels Gravitationskraft zugeführt wird. Selbst bei einer bevorzugten Gestaltung derart, dass sich der Förderabschnitt vorzugsweise an den unteren Bereich des Füllraums anschließt, so dass eine Ausnutzung der Gravitationskraft bei der Übergabe des Betriebsstoffes möglich wäre, können weitere Vorteile erreicht werden. Beispielsweise kann die Übergabegeschwindigkeit erhöht werden, zudem sind Ausführungsformen denkbar, bei denen der im Füllraum befindliche Betriebsstoff durch das gasförmige Transportmedium aufgelockert und/oder vereinzelt und/oder vermischt wird. Zudem kann durch das gasförmige Transportmedium eine Kühlung des Betriebsstoffes ermöglicht werden, indem beispielsweise das gasförmige Transportmedium auf eine gewünschte Temperatur eingestellt wird.

Wie oberhalb angesprochen kann für die Übergabe von Betriebsstoff von dem Füllraum in den Förderabschnitt sowie für die Ausgabe des Betriebsstoffes aus dem Ausgang ein und dasselbe gasförmige Transportmedium zum Einsatz kommen.

In einer vorteilhaften Weiterbildung der vorliegenden Erfindung ist jedoch vorgesehen, ein erstes gasförmiges Transportmedium in den Füllturm zum Transport des Granulats in den Förderabschnitt zuzuführen sowie ein zweites gasförmiges Transportmedium in den Förderabschnitt zum Befördern des Granulats aus dem Ausgang zu den Verarbeitungsstationen zuzuführen. Wobei die Ausgabe vorzugsweise unter Nutzung des ersten und des zweiten Transportmediums erfolgt. Zudem hat es sich als besonders vorteilhaft herausgestellt, eine zeitgleiche Zuführung oder zumindest im Wesentlichen zeitgleiche Zuführung des ersten und des zweiten Transportmediums vorzusehen.

Als gasförmiges Transportmedium kann auch hier wieder sowohl die Überführung, als auch für die Ausgabe vorzugsweise Druckluft zum Einsatz kommen. Gleichwohl kann sich auch der Einsatz eines anderen Gases oder Gasgemisches als sinnvoll erweisen. Insbesondere für reaktive Betriebsstoffe kann sich zudem der Einsatz eines Inertgases oder zumindest eines Inertgases als Bestandteil des Transportmediums als zweckmäßig erweisen.

Dabei hat sich als besonders vorteilhaft herausgestellt, das zumindest zeitweise das erste und das zweite gasförmige Transportmedium gleichzeitig dem Füllturm bzw. dem Förderabschnitt in der offener Position des Übergangs zugeführt wird, um eine Ausgabe des Betriebsstoffes aus dem Ausgang durch das erste und das zweite gasförmige Transportmedium zu ermöglichen.

Es ist vorgesehen, dass die Befüllung des Füllraums durch besagten Eingang mit dem Betriebsstoff mittels eines gasförmiges Transportmediums erfolgt, so dass ein Gemisch aus Betriebsstoff und dem gasförmigen Transportmedium durch den Eingang zugeführt wird, wobei vorzugsweise der Füllraum eine Abluftöffnung aufweist, die vorzugsweise zwischen einer offenen und einer geschlossenen Position wechselbar ist, um das für die Befüllung des Füllraums zum Einsatz kommende gasförmige Transportmedium abzuführen, insbesondere um einen Staudruck im Füllraum zu verhindern, wobei ein Mittel zum Abscheiden des Betriebsstoffes vorgesehen ist, das derart gestaltet und angeordnet ist, dass eine Abscheidung des Betriebsstoff vom gasförmigen Transportmedium ermöglichbar ist, so dass der Betriebsstoff in den Füllraum gelangt und das gasförmige Transportmedium in der offenen Position der Abluftöffnung durch die Abluftöffnung entweicht.

Als Mittel zum Abscheiden kann insbesondere ein im Füllraum, insbesondere im oberen Bereich des Füllraums angeordnetes Gitter oder Sieb zum Einsatz kommen. Optional kann das Mittel zum Abscheiden auch nicht im, sondern angrenzenden zum Füllraum angeordnet sein. Vorzugsweise ist zudem ein Mittel zum Reinigen des Mittels zum Abscheiden vorgesehen, um eine Verstopfung des Mittels zum Abscheiden mit dem Betriebsstoff zu vermeiden und/oder eine Reinigung des Mittels zum Abscheiden zu ermöglichen. In einer bevorzugten Ausführungsform kann als Mittel zum Reinigen das gasförmige Transportmedium insbesondere zur Übergabe des Betriebsstoffes vom Füllraum in den Förderabschnitt zum Einsatz kommen, um das Mittel zum Abscheiden gewissermaßen freizublasen. Hierfür kann die Zuführung dieses gasförmigen Transportmediums derart vorgesehen werden, dass das Mittel zum Abscheiden zwischen besagter Zuführung und dem Förderabschnitt angeordnet ist, wobei der Strömungsverlauf des gasförmigen Transportmediums derart eingestellt ist, dass er durch das Mittel zum Abscheiden in Richtung des Förderabschnittes führt.

Ein weiterer Vorteil ist demnach das Mittel zum Abscheiden derart zwischen einem Zuführabschnitt für ein gasförmiges Transportmedium und dem Förderabschnitt anzuordnen, dass das gasförmige Transportmediums, mit welchem der Betriebsstoff in der offener Position des Übergangs aus dem Füllraum in den Förderabschnitt überführt wird, bei der Zuführung und bei dem Überführen des Betriebsstoffes durch das Mittel zum Abscheiden strömt, um eine Reinigungsmöglichkeit des Mittels zum Abscheiden durch besagtes gasförmiges Transportmedium zu ermöglichen.

Hierbei hat sich zudem als besonderer Vorteil der Einsatz eines Vorratsspeichers herausgestellt, welcher einen Vorratsraum für den Betriebsstoff zur Befüllung des Füllraums mittels eines gasförmiges Transportmediums aufweist, wobei besagte Abluftöffnung an ein Leitungssystem angeschlossen ist, welches in dem Vorratsraum mündet, um eine Belüftungsmöglichkeit des im Vorratsraum befindlichen Betriebsstoffes durch das durch die Abluftöffnung abgeführte gasförmige Transportmedium zu ermöglichen. Dabei kann der Vorratsspeicher Teil der Vorrichtung selbst sein, jedoch auch ein gesondertes Bauteil eines Systems, welches in diesem Fall auch die erfindungsgemäße Vorrichtung beinhaltet.

In einer vorteilhaften Weiterbildung ist ein Mittel zum Verschließen der Abluftöffnung und/oder des Eingangs vorgesehen, wobei das Mittel zum Verschließen ein Stellglied aufweist und derart gestaltet ist, dass die Abluftöffnung und/oder den Eingang durch eine Bewegung des Stellgliedes in Strömungsrichtung des gasförmigen Transportmediums oder entgegengesetzt dazu zu verschließen vermag. Durch ein derartiges Mittel zum Verschließen kann beispielsweise die Gefahr des Abscherens von Teilen des Betriebsstoffes durch das Stellglied minimiert werden, so dass insbesondere eine Verschmutzung des Mittels zum Verschließen verhindert werden kann. Vorzugsweise kommt als Mittel zum Verschließen ein oder mehrere Hubzylinder zum Einsatz, insbesondere um ein Abscheren des Betriebsstoffes am Eingang zu vermeiden.

Ein weiterer Vorteil ist die Vorsehung einer Messvorrichtung, insbesondere einer Waage und/oder eines Füllstandssensor im Füllraum, um die im Füllraum bevorratete Menge oder Masse an Betriebsstoff zu erfassen. Vorzugsweise ist die Vorrichtung dabei an eine Steuereinheit angeschlossen oder mit einer solchen ausgestattet, so dass die durch die Messvorrichtung erfassten Werte verarbeitet und ggf. eine weitere Befüllung des Füllraums mit Betriebsstoff mittels der Werte steuerbar ist.

In einer vorteilhaften Ausgestaltung ist der Füllraum derart bemessen und die Messvorrichtung zur Erfassung des Volumens des in den Füllraum eingefüllten Betriebsstoffes derart gestaltet, dass ein Volumen von etwa einem halben Liter an Betriebsstoff im Füllraumsicher aufnehmbar ist und dass besagte Messvorrichtung dieses Volumen sicher erfassen kann, ggf. um eine weitere Befüllung des Füllraumes zu steuern. Es kann sich ferner als vorteilhaft erweisen, denn Füllraum, insbesondere den Durchmesser und die Höhe des Füllraumes derart anzupassen, dass Füllvolumen an Betriebsstoff von bis zu 15 Liter im Füllraum aufgenommen werden können, welche daraufhin an den Förderabschnitt überführt und über den Ausgang ausgegeben werden.

Es ist ein Mittel zum Verschließen des Ubergangs zwischen Füllraum und Förderabschnitt vorgesehen, wobei das Mittel zum Verschließen ein Stellglied aufweist und derart gestaltet ist, dass es den Übergang durch eine Bewegung des Stellgliedes entgegengesetzt zur Überführungsrichtung des Betriebsstoffes vom Füllraum zum Förderabschnitt zu verschließen vermag. In einer bevorzugten Ausführungsform kommt hierbei ein Hubzylinder zum Einsatz, insbesondere um ein abscheren von Betriebsstoffen zu vermeiden. In einer vorteilhaften Weiterbildung ist das Mittel zum Verschließen im unteren Bereich des Füllraums vorgesehen oder schließt sich an den unteren Bereich des Füllraums an du ist ferner derart gestaltet, dass bei einem Wechsel des Übergangs von der geschlossenen in die offene Position, also bei dem Öffnen des beschriebenen Stellgliedes ein sich an den unteren Bereich des Füllraums anschließender und Übergangsbereich freigegeben wird. Durch diese Erweiterung des Raumes durch den sich an den unteren Bereich des Füllraums anschließenden Übergangsbereiche kann beispielsweise dem im Füllraum bevorrateten Betriebsstoff eine Möglichkeit zum Nachrutschen oder Verteilen gegeben werden, so dass eine Auflockerung des Betriebsstoffes ermöglicht werden, was zu einer vereinfachten Transport des Betriebsstoff mittels des oben beschriebenen gasförmigen Transportmediums führen kann.

In einer vorteilhaften Weiterbildung ist das Mittel zum Verschließen des Übergangs zwischen Füllraum und Förderabschnitt am unteren Bereich des Füllraums vorgesehen, wobei besagtes Stellglied an seiner dem Füllraum zugewandten Seite trichterförmig ausgestaltet ist. Zudem kann es sich als sinnvoll erweisen, dass der Querschnitt des Füllraums größer ist als der Querschnitt des besagten Stellgliedes, wobei der Füllraum im unteren, dem Mittel zum Verschließen zugewandten Bereich derart trichterförmig gestaltet ist, dass sich in der offenen Position des Übergangs, also bei geöffnetem Stellglied, ein im Wesentlichen durchgehender Trichter von besagtem unteren Bereich des Füllraums über den besagten trichterförmigen Bereich des Stellgliedes erstreckt.

In einer vorteilhaften Weiterbildung ist der dem Übergang zugewandte untere Bereich des Füllraums trichterförmig gestaltet und mündet in den Übergang.

Ein weiterer Grundgedanke der vorliegenden Erfindung ist der Einsatz eines Ausgabe- oder Verarbeitungssystems umfassend eine oberhalb ausführlich beschriebene Vorrichtung zum Befördern eines Betriebsstoffes, wie beispielsweise eines Granulats, einen Vorratsbehälter zur Aufnahme des Betriebsstoffes, wobei der Vorratsbehälter über eine Zuleitung mit der Vorrichtung verbunden ist.

In einer vorteilhaften Ausgestaltung ist zudem vorgesehen, dass die Befüllung des Füllraums der Vorrichtung mit dem Betriebsstoff aus dem Vorratsbehälter mittels eines gasförmiges Transportmediums erfolgt, wobei die Vorrichtung eine Abluftöffnung aufweist, um das gasförmige Transportmedium abzuführen und wobei ein Mittel zum Abscheiden des Betriebsstoffes vorgesehen ist, das derart gestaltet ist, dass eine Abscheidung des Betriebsstoffes vom gasförmigen Transportmedium ermöglichbar ist, so dass der Betriebsstoff in den Füllraum gelangt und das gasförmige Transportmedium durch die Abluftöffnung entweicht, wobei an die Abluftöffnung eine Abluftleitung angeschlossen ist, die in dem Vorratsbehälter mündet. Durch eine derartige Gestaltung kann die Abluft aus der Vorrichtung beispielsweise zur Temperierung, insbesondere zur Kühlung des im Vorratsbehälter befindlichen Betriebsstoffes genutzt werden.

Ein weiterer Grundgedanke ist die Bereitstellung und Verwendung eines Ausgabesystems umfassend eine oberhalb beschriebene Vorrichtung zum Befördern eines Betriebsstoffes, einen Vorratsbehälter zur Aufnahme des Betriebsstoffes, wobei der Vorratsbehälter über eine Zuleitung mit der Vorrichtung verbunden ist. Ein weiterer Vorteil ist der Einsatz einer Weiche und/oder ein oder mehrere Auftragseinheiten oder Verarbeitungsstationen, welche jeweils über eine oder mehrere Ausgabeleitungen mit der Ausgabeöffnung der Vorrichtung verbunden sind.

In einer vorteilhaften Weiterbildung erfolgt dabei die Befüllung des Füllraums der Vorrichtung mit dem Betriebsstoff von dem Vorratsbehälter mittels eines gasförmiges Transportmediums, wobei die Vorrichtung eine Abluftöffnung aufweist, um das gasförmige Transportmedium abzuführen und wobei ein Mittel zum Abscheiden des Betriebsstoffes vorgesehen ist, das derart gestaltet ist, dass eine Abscheidung des Betriebsstoffes vom gasförmigen Transportmedium ermöglichbar ist, so dass der Betriebsstoff in den Füllraum gelangt und das gasförmige Transportmedium durch die Abluftöffnung entweicht, wobei an die Abluftöffnung eine Abluftleitung angeschlossen ist, die in dem Vorratsbehälter mündet.

In einer besonders vorteilhaften Ausgestaltung ist an die Ausgabeöffnung der Vorrichtung über eine Ausgabeleitung eine Weiche angeschlossen, wobei an die Weiche wiederum mehrere Auftragseinheiten angeschlossen sind, so dass mittels einer Vorrichtung über die zum Einsatz kommende Weiche eine Vielzahl von Auftragseinheiten mit dem Betriebsstoff versorgt werden können.

Ein Ausführungsbeispiel einer erfindungsgemäßen Vorrichtungen ist mit den beigefügten Figuren angeben. Darin zeigt
Figur 1 eine Schnittansicht einer erfindungsgemäßen Vorrichtung im Befüllungszustand,
Figur 2 eine Schnittansicht der Vorrichtung aus Figur 1 im Ausgabezustand,
Figur 3 eine Schnittansicht einer alternativen erfindungsgemäßen Vorrichtung im Befüllungszustand,
Figur 4 eine Schnittansicht der Vorrichtung aus Figur 3 im Ausgabezustand,
Figur 5 eine schematische Ansicht eines erfindungsgemäßen Ausgabesystems.

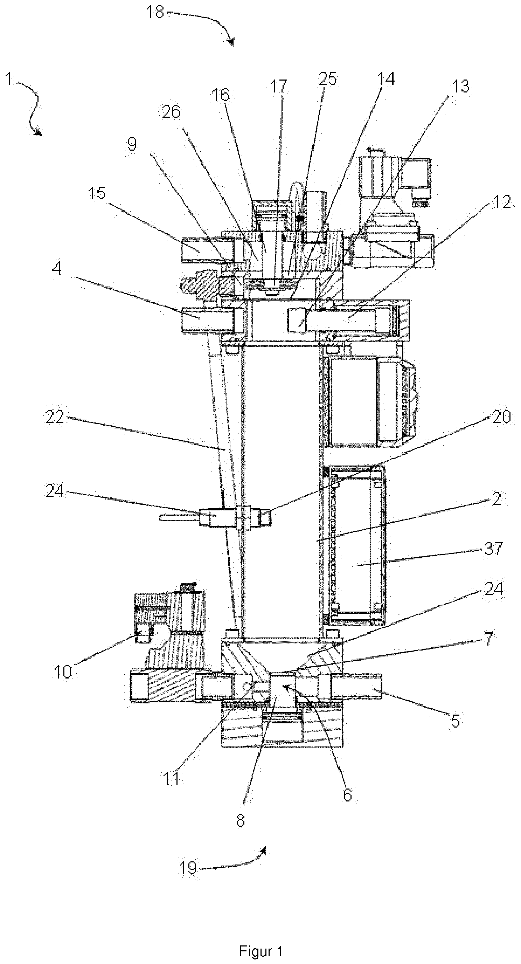

Figur 1 zeigt eine Schnittansicht einer erfindungsgemäßen Füllvorrichtung 1 zur Beförderung eines Betriebsstoffes. Obwohl die Füllvorrichtung 1 grundsätzlich für alle pumpfähigen Betriebsstoffe, also Schüttgüter, gelartige oder pastöse Stoffe oder Flüssigkeiten geeignet ist, kommt sie im gezeigten Ausführungsbeispiel zur Beförderung von Schmelzklebstoffen für beispielsweise Verpackungsmaschinen zum Einsatz. Der Schmelzklebstoff wird dabei als Schüttgut, nämlich in Form eines Granulats bereitgestellt und in einem nicht dargestellten Vorratsspeicher oder Vorratstank gelagert und von dort mittels der Füllvorrichtung 1 an eine nicht dargestellte Verpackungsmaschine oder Heißklebemaschine befördert, wo der Schmelzklebstoff aufgeschmolzen und appliziert werden kann. Hierfür sieht die Füllvorrichtung 1 ein Gehäuse 2 auf, welches insbesondere einen Füllraum 3 umschließt. Der Füllraum 3 ist im gezeigten Ausführungsbeispiel im Wesentlichen zylindrisch, kann aber gleichwohl eine andere Form aufweisen, und dient zur Aufnahme besagten Granulats. An einer Kopfseite 18 der Füllvorrichtung 1 ist eine Eingangsöffnung 4 vorgesehen, über welche dem Füllraum 3 das Granulat zugeführt werden kann. Im Bereich der besagter Kopfseite 18 gegenüberliegenden Bodenseite 19 weist die Füllvorrichtung 1 ferner eine Ausgangsöffnung 5 auf, die zum Befördern des Granulats aus der Füllvorrichtung 1 insbesondere zu besagten nicht gezeigten Verpackungsmaschinen oder Heißklebemaschinen dient.

Der Füllraum 3 dient insbesondere zur Vorportionierung einer festgelegten Menge an Granulat. Hierfür ist ein Füllstandssensor 20 vorgesehen, der den Füllstand an eingefülltem Granulat in den Füllraum 3 überwacht. Der Füllstandssensor 20 steht dabei über eine nicht gezeigte Steuerverbindung mit einer Steuereinheit 37 in Verbindung, welche wiederum die durch den Füllstandssensor 20 erfassten Daten zu verarbeiten und in Abhängigkeit davon die Zuführung des Granulats über die Eingangsöffnung 4 in den Füllraum 3 zu steuern vermag. Gleichwohl können weitere oder alternative Messvorrichtungen vorgesehen werden, um die Menge, insbesondere das Volumen oder das Gewicht des in den Füllraum 3 eingebrachten Granulats zu überwachen. So ist insbesondere der Einsatz einer nicht abgebildeten Waage für die Füllvorrichtung 1 denkbar, um das durch die Befüllung mit Granulat zusätzliche Gewicht zu ermitteln. Ferner kann sich der Einsatz eines Fotosensors oder eine Kamera als sinnvoll erweisen, die beispielsweise durch ein Schauglas in der Wandung des Gehäuses 2 des Füllraums 3 überwachen, wieviel Granulat sich im Füllraum 3 befindet.

In der gezeigten Ausführungsform gelangt das Granulat mittels eines gasförmigen Transportmediums durch die Eingangsöffnung 4 in den Füllraum 3. Als gasförmiges Transportmedium kommt Druckluft zum Einsatz, wobei das Granulat mittels Druckluft durch die Eingangsöffnung 4 in den Füllraum 3 befördert wird. Gleichwohl ist in einer alternativen Ausgestaltung ein Ansaugen des Granulats mittels eines gasförmigen Transportmediums durch die Eingangsöffnung 4 insbesondere durch Anlegen eines Vakuums möglich. Bei der gezeigten Füllvorrichtung 1 wird das Granulat jedoch mittels Druckluft in die Einfüllöffnung 4 eingefüllt. Am Gehäuse 2 ist im Bereich der Kopfseite 18 oberhalb des Füllraums 3 und der Eingangsöffnung 4 eine Abluftöffnung 15 vorgesehen, um das zur Beförderung des Granulats in den Füllraum 3 benötigte gasförmige Transportmedium wieder durch einen Abluftschlitz 25 und einen sich daran anschließenden und in der Abluftöffnung 15 mündenden Abluftkanal 26 aus dem Füllraum 3 abzuführen. Zudem ist innerhalb des Gehäuses 2 ist im Bereich der Kopfseite 18 oberhalb des Füllraums 3 und zwischen der Eingangsöffnung 4 und der Abluftöffnung 15 als Mittel zum Abscheiden ein Abscheidesieb 14 vorgesehen. Das Abscheidesieb 14 erstreckt sich dabei über den gesamten freien Querschnitt innerhalb des Gehäuses 2 zwischen Eingangsöffnung 4 und Abluftöffnung 15 derart, dass das gasförmige Transportmedium; welches zur Beförderung des Granulats in den Füllraum 3 genutzt wird, nach dem Einströmen in die Eingangsöffnung 4 zwingend durch das Abscheidesieb 14 strömt, um zur Abluftöffnung 15 zu gelangen. Vorzugsweise ist während des Befüllvorgangs lediglich die Einfüllöffnung 4 zur Befüllung des Füllraums 3 sowie die Abluftöffnung 15 zur Abführung des gasförmigen Transportmediums geöffnet. Sämtliche andere Öffnungen der Füllvorrichtung 1 sind in jedoch geschlossen, was vorzugsweise durch besagte Steuereinheit 37 gesteuert wird. Das Abscheidesieb 14 weist dabei eine Siebgröße auf, die derart gewählt ist, dass das Granulat von dem gasförmigen Transportmedium abgeschieden wird, so dass das Granulat in den unterhalb des Abscheidesiebs 4 gelegenen Füllraum 3 gelangt und das gasförmige Transportmedium durch die Abluftöffnung 15 entweichen kann. Das Abscheidesieb 14 ist vorzugsweise austauschbar gestaltet, um verschiedene Korngrößen an Granulat abscheiden zu können.

Zum Verschließen der Eingangsöffnung 4 weist die Füllvorrichtung 1 einen Hubzylinder 12 mit einem Stellglied 13 als Mittel zum Verschließen auf. Die Abluftöffnung 15 oder vielmehr der Abluftschlitz 25 kann ferner mittels eines weiteren Hubzylinders 16 aufweisend ein Stellmittel 17 als Mittel zum Verschließen verschlossen werden. Beide Hubzylinder 12, 16 werden von der Steuereinheit 37 angesteuert. Gleichwohl können auch andere dem Fachmann bekannten, und sich für den jeweiligen Einsatzzweckeignenden Verschlussmöglichkeiten der Öffnungen der Füllvorrichtung 1, insbesondere der Eingangsöffnung 4 und der Abluftöffnung 15 vorgesehen werden.

Im gezeigten Ausführungsbeispiel ist an besagte Abluftöffnung 15 ein nicht dargestelltes Leitungssystem angeschlossen, über welches das abgeführte gasförmige Transportmedium aus der Füllvorrichtung 1 in besagten nicht dargestellten Vorratsspeicher für das Granulat rückgeführt wird, wobei das Leitungssystem derart in einem Vorratsraum des Vorratsspeichers mündet, dass eine Belüftungsmöglichkeit des im Vorratsraum befindlichen Granulats durch das durch die Abluftöffnung 15 abgeführte gasförmige Transportmedium ermöglicht werden kann. Dadurch kann insbesondere eine Kühlung für das dort befindliche Granulat und/oder eine Lockerung des Granulats ermöglicht werden.

Im der Bodenseite 19 zugewandten Bereich der Füllvorrichtung 1 mündet der Füllraum 3 mit einen Trichter 24 in einer als Übergang 7 gestaltete Öffnung, die im gezeigten Zustand der Füllvorrichtung 7 durch das Stellglied eines Hubzylinders 8 verschlossen ist. Das Stellglied des Hubzylinders 8 erstreckt sich dabei über einen Förderabschnitt 6, welcher zur Beförderung des Granulats aus dem über die Ausgangsöffnung 5 aus der Füllvorrichtung 1 heraus dient. Zu dieser Beförderung weist die Füllvorrichtung 1 ferner einen weiteren Anschluss für ein gasförmiges Transportmedium, hier einen Druckluftanschluss 10 mit einer auf oder in den Förderabschnitt 6 gerichteten Druckluftdüse 11, zur Beaufschlagung des Förderabschnitts 6 mit Druckluft zur Beförderung des Granulats aus dem Ausgang 5. Im gezeigten Beispiel ist jedoch wie oberhalb angesprochen der Füllraum 3 von dem Förderabschnitt 6 mittels des Stellegliedes des Hubzylinders 8, welches den Übergang 7 blockiert oder verschließt, abgetrennt, so dass kein Granulat von dem Füllraum 3 in den Förderabschnitt 6 gelangen kann.

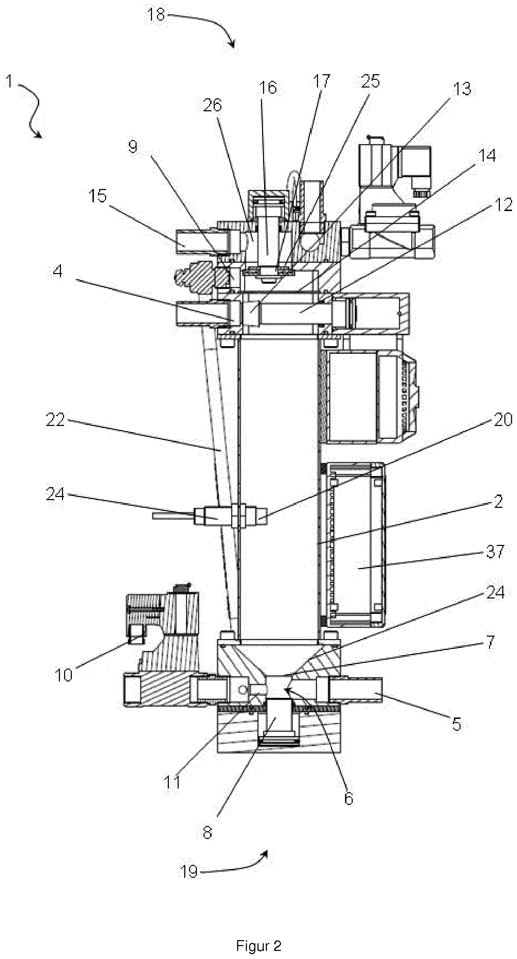

Figur 2 zeigt eine Schnittansicht der Füllvorrichtung 1 aus Figur 1 im Ausgabezustand. Die oberhalb beschriebene Zuführung des Granulats durch die Eingangsöffnung 4 ion den Füllraum 3 ist hierbei abgeschlossen. Die Zuführung des Granulats mittels des gasförmigen Transportmediums erfolgte solange, bis der Füllstandsensor 20 ein festgelegtes Füllvolumen an Granulat im Füllraum 3 gemessen hat. So dann schaltete die Steuereinheit 37 die Zuführung des Granulats entweder aktiv an dem nicht dargestellten Vorratsspeicher oder Vorratstank ab. Zumindest jedoch ist durch die Steuereinheit 37 der im Gehäuse 2 befindliche Hubzylinder 12 als Mittel zum Verschließen der Eingangsöffnung 4 aufweisend ein bewegliches Stellglied 13 aktiviert worden, der derart angeordnet und ausgestaltet ist, dass ein Verschließen der Eingangsöffnung 4 mittels einer Bewegung des Stellgliedes 13 entgegengesetzt zur Strömungsrichtung des gasförmigen Transportmediums beim Befüllen des Füllraums 3 ermöglichbar ist. Zudem ist der weiterer Hubzylinder 16 mit einem Stellglied 17 im Bereich der Kopfseite 18 oberhalb des Abscheidesiebs 14 vorgesehen, welcher zum Verschließen der Abluftöffnung 15 dient, wobei das Stellglied 17 derart gestaltet ist, dass es die Abluftöffnung 15 oder vielmehr Abluftschlitz 25 als Strömungsweg zur Abluftöffnung 15 durch eine Bewegung des Stellgliedes 16 entgegengesetzt zur Strömungsrichtung des gasförmigen Transportmediums verschlossen hat. Die Aktivierung des Hubzylinders 16 erfolgte auch hier mittels der Steuereinheit 37 nach dem Erfassen des festgelegten Füllvolumens im Füllraum 3 durch den Füllstandsensor 20.

Ferner ist durch die Steuereinheit 37 der Hubzylinder 8 aktiviert worden und von dem in Figur 1 gezeigten geschlossenen Zustand, bei der das Stellglied des Hubzylinders 8 den Übergang 7 blockiert hat und sich daher der Übergang 7 in der geschlossenen Position befand, in einer offenen Zustand überführt worden, bei der der Übergang 7 freigegeben ist und sich daher in der offenen Position befindet. Die Bewegung des Stellgliedes erfolgte dazu in einer Richtung, welche von der Kopfseite 18 in Richtung Bodenseite 19 verläuft. Die Bewegung des Stellgliedes erfolgte derart, dass der unterhalb des Übergangs 7 und des Füllraums 3 angeordnete Förderabschnitt 6 freigegeben worden ist, sowie die in den Förderabschnitt 6 mündende Druckluftdüse 11 und die gegenüberliegend von der Druckluftdüse 11 mit dem Förderabschnitt 6 über einen Ausgangskanal kommunizierende Ausgangsöffnung 5. Die Druckluftdüse 11 dient zur Beaufschlagung des Förderabschnittes 6 mit einem gasförmigen Transportmedium, im vorliegenden Fall Druckluft, zur Ausgabe des Granulats aus der Ausgangsöffnung 5.

Durch den nun freigegebenen Übergang 7 kann das durch die Eingangsöffnung 4 in den Füllraum 3 gefüllte Granulat in der Förderabschnitt 6 gelangen. Dies kann einerseits mittels Gravitationskraft erfolgen, da der Förderabschnitt 6 wie oberhalb beschrieben unterhalb des Füllraums 3 vorgesehen ist. Erfindungsgemäß kommt jedoch hier eingasförmiges Transportmedium zum Einsatz. Im Bereich der Kopfseite 18 weist die Füllvorrichtung 1 oberhalb des Abscheidesiebs 14 einen Druckluftanschluss 9 auf, durch welchen Druckluft als besagtes gasförmiges Transportmedium zur Überführung des Granulats von dem Füllraum 3 in den Förderabschnitt 6 in denFüllraum3 eingebracht werden kann. Durch die besagte Anordnung oberhalb des Abscheidesiebs 14 strömt die mittels des Druckluftanschlusses in die Füllvorrichtung 1 eingebrachte Druckluft durch das Abscheidesieb 14 um in den Füllraum 3 zu gelangen, in diesem Fall also entgegengesetzt zur oberhalb beschriebenen Abluft, welche durch das Abscheidesieb 14 und dann durch die in Figur 2 geschlossene Abluftöffnung 15 aus der Füllvorrichtung 1 herausgeführt wird. Durch dieses Hindurchströmen kann eine Reinigung des Abscheidesiebs 14 ermöglicht werden, da etwaige in den Maschen festsitzende Granulatkörner herausgeblasen werden und in den Füllraum 3 gelangen. Die Druckluft strömt weiter in den Füllraum 3 und überführt das Granulat von dort durch den Übergang 7 in der offenen Position in den Förderabschnitt 6. Gleichzeitig erfolgt eine Druckbeaufschlagung des Förderabschnittes 6 mittels der Druckluftdüse 11 zur Beförderung des aus dem Füllraum 3 in den Förderabschnitt 6 gelangten Granulats. In gezeigten Ausführungsbeispiel ist der Anschluss der Düse 11 mit dem oberhalb beschrieben Druckluftanschluss 9 über eine Rohrverbindung 22 verbunden, so dass der Füllvorrichtung 1 sowohl über die Düse 11, als auch über den Druckluftanschluss 9 gleichzeitig Druckluft zugeführt wird. Selbiges wird auch hier wieder von der Steuereinheit 37 gesteuert. Demnach wird der Füllvorrichtung über den Druckluftanschluss 9 ein erstes gasförmiges Transportmedium in den Füllraum 3 zum Transport des Granulats in den Förderabschnitt 6 zugeführt sowie ein über die Düse 11 ein zweites gasförmiges Transportmedium in den Förderabschnitt 6, zum Befördern des Granulats aus der Ausgangsöffnung 5.

Wie bereits eingangs erwähnt ist das Stellglied des Hubzylinders 8 derart versetzt worden, dass eine Kommunikation von Fördeabschnitt 6 und Ausgangsöffnung über besagten Ausgangskanal möglich ist. Die in den Förderabschnitt 6 über den Druckluftanschluss 9 und die Düse 11 eingebrachte Druckluft kann somit über die Ausgangsöffnung 5 entweichen, wobei eine Beförderung des Granulats aus der Ausgangsöffnung 5 gewährleistet werden kann. Demnach erfolgt also eine Beförderung des Granulats aus der Ausgangsöffnung 5 nicht nur unter Nutzung der über die Druckluftdüse 11 eingebrachten Druckluft, sondern vielmehr auch unter Ausnutzung der über den Druckluftanschluss 9 dem Füllraum 3 zugeführten Druckluft, welcher zur Überführung des Granulats von dem Füllraum 3 in den Förderabschnitt 6 diente.

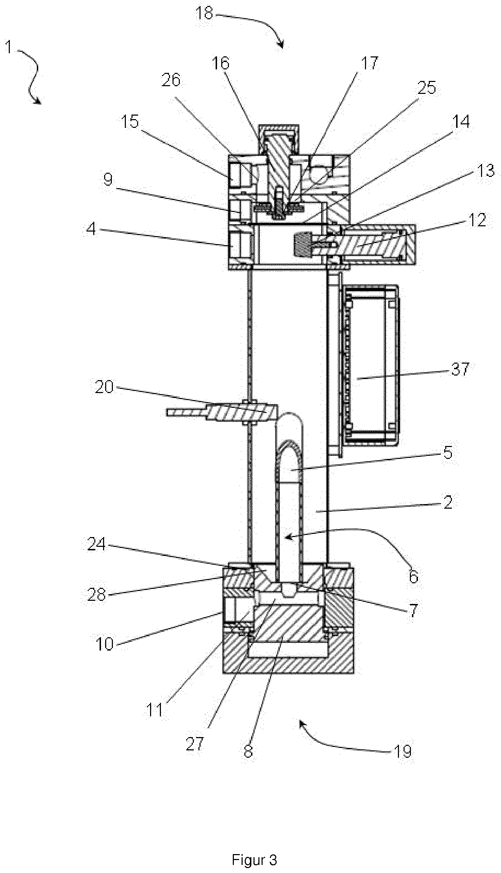

Figur 3 zeigt eine Schnittansicht einer alternativen erfindungsgemäßen Füllvorrichtung1 im Befüllungszustand. Auchdiese Füllvorrichtung weist die Kopfseite 18 und die Bodenseite 19 sowie das Gehäuse 2 auf, welches den Füllraum 3 zur Aufnahme eines Granulats umschließt. Die Funktion und die grundsätzlche Wirkungsweise entspricht der mit den Figuren 1 und 2 gezeigten Füllvorrichtung 1, so dass die entsprechenden Beschreibungspassagen auch auf diese Füllvorrichtung 1 zu lesen ist. Insbesondere die Funktion, der Aufbau und Anordnung der Eingangsöffnung 4 mit dem das Stellglied 13 aufweisenden Hubzylinder 12, das Abscheidesieb 14, die Abluftöffnung 15 mit dem das Stellglied 17 aufwesienden Hubzylinder 16, den Druckluftabnschluss 9, den Füllstandssensor 20 entsprechend denen der mit den Figuren 1 und 2 gezeigten Füllvorrichtung 1, so das hier auf besagte Beschreibungspassagen Bezug genommen wird.

Ein Unterschied ist jedoch der Förderabschnitt 6 der hier gezeigten Füllvorrichtung 1. Dieser erstreckt sich als im Wesentlichen hohlzylindrische Röhre innerhalb des Füllraumes 3, wobei die Röhre in Richtung Kopfseite 18 in einem Bogensegment mündet und aus dem Füllraum 3 in einer Seitenwand des Gehäuses 2 in der Ausgangsöffnung 5 mündet. Die Röhre ist ferner in Richtung Bodenseite 19 offen gestaltet. Der freie Bereich des Füllraums zwischen dem Förderabschnitt 6 und der Innenwand des Gehäuses 2 ist hier als Übergang 7 ausgebildet, über welchen das Granulat von dem Füllraum 3 in den Förderabschnitt 6 überführbar ist.

In Figur 3 befindet sich der Übergang 7 im geschlossenen Zustand. Der Übergang 7 wird hier durch das Stellglied eines an der Bodenseite 19 vorgesehenen Hubzylinders verschlossen, so dass keine Kommunikation von Füllraum 3 und Förderabschnitt 6 möglich ist. Das Stellglied des Hubzylinders 8 weist einen in etwa hinsichtlich des Füllraums 3 entsprechenden Querschnitt auf und bildet den Bodenbereich des Füllraums 3. Hierzu weist die Oberseite des Stellgliedes einen trichterförmigen Bereich 24 auf. Zudem weist das Stellglied einen Kanal 27 auf, mit dem eine Kommunikation der Druckluftdüse 11 mit dem Förderabschnitt 6 zur Ausgabe des Granulats aus der Ausgabeöffnung 5 ermöglicht werden kann.

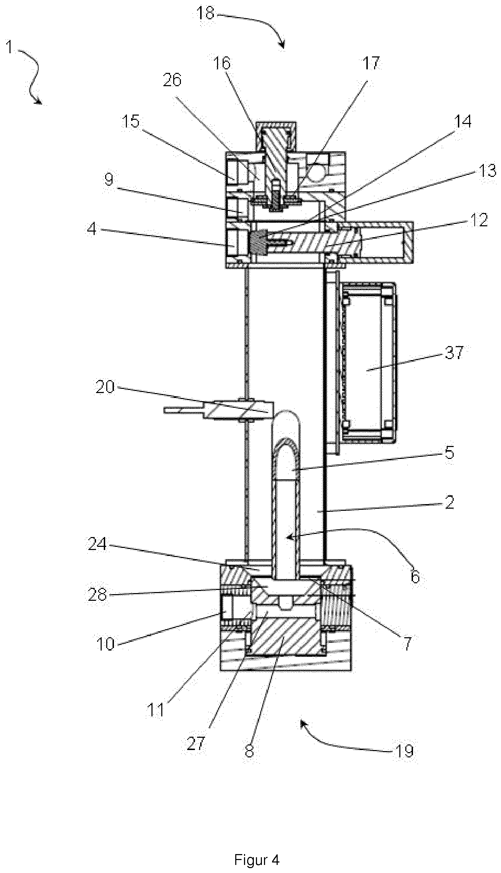

Ist auch hier wieder der vorbestimmte Füllstand im Füllraum 3 an Granulat erreicht, werden Eingangsöffnung 4 und Abluftöffnung 15 wie oberhalb beschreiben geschlossen. Figur 4 zeigt eine Schnittansicht der Vorrichtung aus Figur 3 im Ausgabezustand. Zur Überführung des Granulats wird durch den Hubzylinder 8 die Steuereinheit 37 betätigt, so dass dessen Stellglied sich in Richtung Bodenseite 19, also entgegengesetzt zur Strömungsrichtung des Granulats, bewegt und den Übergang 7 freigibt. Der Übergang 7 befindet sich somit in der offenen Position, so dass eine Kommunikation von Füllraum 3 und Förderabschnitt 6 möglich ist. Der trichterförmige Bereich 27 des Stellgliedes bildet in diesem Zustand einen bodenseitigen Trichter 24 des Füllraums 3.

Durch die Bewegung des besagten Stellgliedes erfolgt eine Kopplung des Kanals 27 mit der Druckluftdüse 11. Der Kanal 27 erstreckt sich dabei derart abgewinkelt durch das Stellglied, dass er auf dessen Oberseite und gegenüberliegend des Eingangs des Förderabschnittes 6 mündet. Durch oberhalb beschriebene Beaufschlagung von Druckluft mittels des Druckluftanschlusses 9 und der Druckluftdüse 11 ist einerseits eine Überführung des Granulats von dem Füllraum 3 durch den Übergang 7 in offener Position in den Förderabschnitt 6 möglich. Andererseits erfolgt ebenfalls eine Ausgabe des Granulats über den Fördetrabschnitt 6 aus der Ausgangsöffnung 5. Durch den trichterförmigen Bereich 28 kann zudem ein besonders gute Führung des Granulats in Richtung des eingangs des Förderabschnittes 6 gewährleistet werden. Insbesondere Verwirbelungen innerhalb des Füllraumes 3 können durch den Einsatz des trichterförmigen Bereichs 28 minimiert werden.

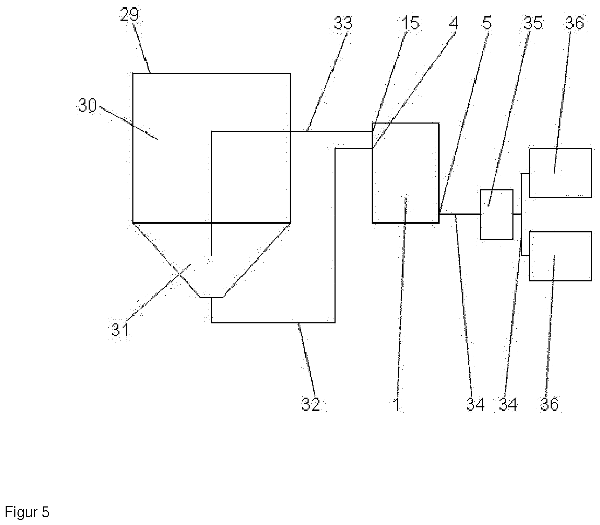

Figur 5 eine schematische Ansicht eines erfindungsgemäßen Ausgabesystems 100 umfassend eine in den Figuren 1 bis 4 gezeigte Füllvorrichtung 1 zum Befördern eines Granulats sowie einen Vorratsbehälter 29 zur Aufnahme des Granulats mit einem bodenseitigen Ausgabetrichter 31, wobei der Vorratsbehälter 19 über eine Zuleitung 32 mit der Füllvorrichtung 1 verbunden ist. Die Befüllung des Füllraums 3 der Füllvorrichtung 1 mit dem Granulat von dem Vorratsbehälter 29 erfolgt dabei mittels eines gasförmigen Transportmediums, wobei die Füllvorrichtung eine oberhalb beschriebene Abluftöffnung 15 aufweist, um das gasförmige Transportmedium abzuführen und wobei ein Mittel zum Abscheiden 14 des Granulats vorgesehen ist, das derart gestaltet ist, dass eine Abscheidung des Granulats vom gasförmigen Transportmedium ermöglichbar ist, so dass das Granulat in den Füllraum 3 gelangt und das gasförmige Transportmedium durch die Abluftöffnung 15 entweicht. Dabei ist erfindungsgemäß an die Abluftöffnung 15 eine Abluftleitung 33 angeschlossen, die in dem Vorratsbehälter 29 mündet, wobei die Abluft zur Temperierung, insbesondere zur Kühlung des im Vorratsbehälter 29 befindlichen Granulats genutzt wird. Ferner sind mehrere Auftragseinheiten 36 zum Aufschmelzen und Auftragen des Granulats vorgesehen die mittels Ausgabeleitungen 34 über eine Weiche 35 über wiederum eine Ausgabeleitung 34 an die Ausgangsöffnung 5 der Füllvorrichtung 1 verbunden sind. Demnach können mittels einer Füllvorrichtung 1 eine Vielzahl von Austragseinheiten 34 versorgt werden, wobei die Verteilung des geförderten Granulats mittels der Weiche 35 erfolgt, welche beispielsweise über die Steuereinheit 37 der Auftragseinheit 1 ansteuerbar ist.

| | | | |
|---|---|---|---|
| 1 | Füllvorrichtung | 20 | Füllstandssensor |
| 2 | Gehäuse | 21 | Anschluss |
| 3 | Füllraum | 22 | Rohrverbindung |
| 4 | Eingangsöffnung | 23 | Druckluftanschluss |
| 5 | Ausgangsöffnung | 24 | Trichter |
| 6 | Förderabschnitt | 25 | Abluftschlitz |
| 7 | Ubergang | 26 | Abluftkanal |
| 8 | Hubzylinder | 27 | Kanal |
| 9 | Druckluftanschluss | 28 | Trichterförmiger Bereich |
| 10 | Druckluftanschluss | 29 | Vorratsbehälter |
| 11 | Druckluftdüse | 30 | Vorratsraum |
| 12 | Hubzylinder | 31 | Ausgabetrichter |
| 13 | Verschlussmittel | 32 | Zuleitung |
| 14 | Abscheidesieb | 33 | Abluftleitung |
| 15 | Abluftöffnung | 34 | Ausgabeleitung |
| 16 | Hubzylinder | 35 | Weiche |
| 17 | Verschlussstopfen | 36 | Auftragseinheit |
| 18 | Kopfseite | 37 | Steuereinheit |
| 19 | Bodenseite | | |

## Patentansprüche

1. Vorrichtung (1) zum Befördern eines Betriebsstoffes aufweisend einen Füllraum (3) mit einem Eingang (4) zur Befüllung des Füllraums (3) mit dem Betriebsstoff, einen Förderabschnitt (6) zum Befördern des Betriebsstoffes über einen Ausgang (5), einen Übergang (7) von Füllraum (3) zum Förderabschnitt (6), wobei ein Mittel zum Verschließen (8) des Übergangs (7) zwischen Füllraum (3) und Förderabschnitt (6) vorgesehen ist, wobei das Mittel zum Verschließen (8) ein Stellglied (8) aufweist und derart gestaltet ist, dass es den Übergang (7) durch eine Bewegung des Stellgliedes (8) entgegengesetzt zur Überführungsrichtung des Betriebsstoffes vom Füllraum (3) zum Förderabschnitt (6) zu verschließen vermag, um zwischen einer offenen und einer geschlossenen Position des Übergangs (7) zu wechseln, um in der offenen Position eine Kommunikation zwischen Füllraum (3) und Förderabschnitt (6) und in der geschlossenen Position eine Abtrennung des Förderabschnittes (6) vom Füllraum (3) zu ermöglichen, wobei der Füllraum (3) eine Zuführung (9) zur Zuführung von Druckluft als gasförmiges Transportmedium aufweist, um den durch den Eingang (4) in den Füllraum (3) gefüllten Betriebsstoff in der offenen Position des Übergangs (7) in den Förderabschnitt (6) zu überführen und um den Betriebsstoff von dem Förderabschnitt (6) aus dem Ausgang (5) auszugeben, wobei die Befüllung des Füllraums (3) mit dem Betriebsstoff mittels eines gasförmiges Transportmediums erfolgt, wobei eine Abluftöffnung (15) vorgesehen ist, um das gasförmige Transportmedium abzuführen und wobei ein Mittel zum Abscheiden (14) des Betriebsstoffes vorgesehen ist, das derart gestaltet ist, dass eine Abscheidung des Betriebsstoffes vom gasförmigen Transportmedium ermöglichbar ist, so dass der Betriebsstoff in den Füllraum (3) gelangt und das gasförmige Transportmedium durch die Abluftöffnung (15) entweicht.

2. Vorrichtung (1) nach Anspruch 1, **dadurch gekennzeichnet, dass** Druckluft alserstes gasförmiges Transportmedium in den Füllraum (3) zum Transport des Betriebsstoffes in den Förderabschnitt (6) zugeführt wird und Druckluft als zweites gasförmiges Transportmedium in den Förderabschnitt (3) zum Befördern des Betriebsstoffes aus dem Ausgang (5) insbesondere zu einer an den Ausgang (5) angeschlossenen Verarbeitungsstation.

3. Vorrichtung (1) nach Anspruch 2, **dadurch gekennzeichnet, dass** zumindest zeitweise das erste und das zweite gasförmige Transportmedium gleichzeitig dem Füllraum (3) bzw. dem Förderabschnitt (6) in der offener Position des Übergangs (7) zugeführt wird, um eine Ausgabe des Betriebsstoffes aus dem Ausgang (5) durch sowohl das erste, als auch das zweite gasförmige Transportmedium zu ermöglichen.

4. Vorrichtung nach Anspruch 1, **dadurch gekennzeichnet, dass** das Mittel zum Abscheiden (14) als im Füllraum (3) angeordnetes Gitter oder Sieb gestaltet ist.

5. Vorrichtung (1) nach einem der vorhergehenden Ansprüche, **dadurch gekennzeichnet, dass** das Mittel zum Abscheiden (14) derart zwischen einem Zuführabschnitt (9) für Druckluft als gasförmiges Transportmedium und dem Förderabschnitt (6) angeordnet ist, dass das gasförmige Transportmedium, mit welchem der Betriebsstoff in der offener Position des Übergangs (7) aus dem Füllraum (3) in den Förderabschnitt (6) überführt wird, bei der Zuführung und bei dem Überführen des Betriebsstoffes durch das Mittel zum Abscheiden (14) strömt, um eine Reinigungsmöglichkeit des Mittels zum Abscheiden (14) durch besagtes gasförmiges Transportmedium zu ermöglichen.

6. Vorrichtung (1) nach einem der vorhergehenden Ansprüche, **dadurch gekennzeichnet, dass** ein Mittel zum Verschließen (16, 17, 12, 13) der Abluftöffnung (15) und/oder des Eingangs (4) vorgesehen ist, wobei das Mittel zum Verschließen (16, 17, 12, 13) ein Stellglied (13, 17) aufweist und derart gestaltet ist, dass es die Abluftöffnung (15) und/oder den Eingang (4) durch eine Bewegung des Stellgliedes (13, 17) in Strömungsrichtung des gasförmigen Transportmediums oder entgegengesetzt dazu zu verschließen vermag.

7. Vorrichtung (1) nach einem der vorhergehenden Ansprüche, **dadurch gekennzeichnet, dass** der dem Übergang (7) zugewandte untere Bereich des Füllraums (3) trichterförmig (24, 27) gestaltet ist und vorzugsweise in den Übergang (7) mündet.

8. Ausgabesystem (100) umfassend eine Vorrichtung (1) zum Befördern eines Betriebsstoffes nach einem der Ansprüche 1 bis 7, einen Vorratsbehälter (29) zur Aufnahme des Betriebsstoffes, wobei der Vorratsbehälter (19) über eine Zuleitung (32) mit der Vorrichtung (1) verbunden ist.

9. Ausgabesystem (100) nach Anspruch 8, **dadurch gekennzeichnet, dass** der Vorratsbehälter (29) aufweisend einen Vorratsraum für den Betriebsstoff zur Befüllung des Füllraums (3) mittels Druckluft gasförmiges Transportmediums vorgesehen ist, wobei besagte Abluftöffnung (15) an ein Leitungssystem angeschlossen ist, welches in dem Vorratsraum mündet, um eine Belüftungsmöglichkeit des im Vorratsraum befindlichen Betriebsstoffes durch das durch die Abluftöffnung (15) abgeführte gasförmige Transportmedium zu ermöglichen.

10. Ausgabesystem (100) nach einem der Ansprüche 8 oder 9, **dadurch gekennzeichnet, dass** die Befüllung des Füllraums (3) der Vorrichtung (1) mit dem Betriebsstoff von dem Vorratsbehälter (29) mittels Druckluft als gasförmiges Transportmediums erfolgt, wobei die Vorrichtung (1) eine Abluftöffnung (15) aufweist, um das gasförmige Transportmedium abzuführen und wobei ein Mittel zum Abscheiden (14) des Betriebsstoffes vorgesehen ist, das derart gestaltet ist, dass eine Abscheidung des Betriebsstoffes vom gasförmigen Transportmedium ermöglichbar ist, so dass der Betriebsstoff in den Füllraum (3) gelangt und das gasförmige Transportmedium durch die Abluftöffnung (15) entweicht, wobei an die Abluftöffnung (15) eine Abluftleitung (33) angeschlossen ist, die in dem Vorratsbehälter (29) mündet.

## Claims

1. Device (1) for conveying a fuel, comprising a filling chamber (3) having an inlet (4) for filling the filling chamber (3) with the fuel, a conveying portion (6) for conveying the fuel via an outlet (5), and a transition (7) from the filling chamber (3) to the conveying portion (6), wherein a means (8) for closing the transition (7) between the filling chamber (3) and the conveying portion (6) is provided, wherein the closing means (8) comprises an actuator (8) and is designed so as to be able to close the transition (7) by moving the actuator (8) counter to the direction of transfer of the fuel from the filling chamber (3) to the conveying portion (6) in order to switch between an open position and a closed position of the transition (7), in order to allow communication between the filling chamber (3) and the conveying portion (6) in the open position and separation of the conveying portion (6) from the filling chamber (3) in the closed position, wherein the filling chamber (3) has a feed line (9) for feeding compressed air as a gaseous transport medium in order to transfer the fuel, filled through the inlet (4) into the filling chamber (3), into the conveying portion (6) in the open position of the transition (7) and in order to dispense the fuel from the conveying portion (6) out of the outlet (5), wherein the filling chamber (3) is filled with the fuel by means of a gaseous transport medium, wherein an exhaust air opening (15) is provided in order to discharge the gaseous transport medium and wherein a means (14) for separating the fuel is provided, which means is designed so as to allow the fuel to be separated from the gaseous transport medium such that the fuel reaches the filling chamber (3) and the gaseous transport medium escapes through the exhaust air opening (15).

2. Device (1) according to claim 1, **characterized in that** compressed air is fed into the filling chamber (3) as a first gaseous transport medium in order to transport the fuel into the conveying portion (6) and compressed air is fed into the conveying portion (3) as a second gaseous transport medium in order to convey the fuel out of the outlet (5) in particular to a processing station connected to the outlet (5).

3. Device (1) according to claim 2, **characterized in that**, in the open position of the transition (7), the first and the second gaseous transport medium are at least temporarily simultaneously fed to the filling chamber (3) or to the conveying portion (6), respectively, in order to allow the fuel to be dispensed from the outlet (5) by means of both the first and the second gaseous transport medium.

4. Device according to claim 1, **characterized in that** the separating means (14) is designed as a grating or sieve arranged in the filling chamber (3).

5. Device (1) according to one of the preceding claims, **characterized in that** the separating means (14) is arranged between a feed portion (9) for compressed air as a gaseous transport medium and the conveying portion (6) such that the gaseous transport medium, by means of which, in the open position of the transition (7), the fuel is transferred out of the filling chamber (3) into the conveying portion (6), flows through the separating means (14) during feeding and during transfer of the fuel, in order to allow the separating means (14) to be cleaned by means of said gaseous transport medium.

6. Device (1) according to one of the preceding claims, **characterized in that** a means (16, 17, 12, 13) for closing the exhaust air opening (15) and/or the inlet (4) is provided, the closing means (16, 17, 12, 13) comprising an actuator (13, 17) and being designed so as to be able to close the exhaust air opening (15) and/or the inlet (4) by moving the actuator (13, 17) in the direction of flow of the gaseous transport medium or counter thereto.

7. Device (1) according to one of the preceding claims, **characterized in that** the lower region of the filling chamber (3) next to the transition (7) is funnel-shaped (24, 27) and preferably opens into the transition (7).

8. Dispensing system (100), comprising a device (1) for conveying a fuel according to one of claims 1 to 7 and a storage container (29) for accommodating the fuel, the storage container (19) being connected to the device (1) via a supply line (32).

9. Dispensing system (100) according to claim 8, **characterized in that** the storage container (29) is provided comprising a storage chamber for the fuel for filling the filling chamber (3) by means of a compressed air gaseous transport medium, said exhaust air opening (15) being connected to a line system which opens into the storage chamber in order to allow the fuel located in the storage chamber to be ventilated by the gaseous transport medium discharged through the exhaust air opening (15).

10. Dispensing system (100) according to one of claims 8 or 9, **characterized in that** the filling chamber (3) of the device (1) is filled with the fuel from the storage container (29) by means of compressed air as a gaseous transport medium, the device (1) having an exhaust air opening (15) in order to discharge the gaseous transport medium, and a means (14) for separating the fuel being provided which is designed such that the fuel can be separated from the gaseous transport medium, so that the fuel reaches the filling chamber (3) and the gaseous transport medium escapes through the exhaust air opening (15), an exhaust air line (33) which opens into the storage container (29) being connected to the exhaust air opening (15).

## Revendications

1. Dispositif (1) permettant l'acheminement d'une matière de service, présentant une chambre de remplissage (3) comportant une entrée (4) permettant le remplissage de la chambre de remplissage (3) avec la matière de service, un segment d'acheminement (6) permettant l'acheminement de la matière de service par l'intermédiaire d'une sortie (5), un élément de transition (7) depuis la chambre de remplissage (3) jusqu'au segment d'acheminement (6), un moyen de fermeture (8) de l'élément de transition (7) étant prévu entre la chambre de remplissage (3) et le segment d'acheminement (6), le moyen de fermeture (8) présentant un actionneur (8) et étant conçu de manière à pouvoir fermer l'élément de transition (7) en déplaçant l'actionneur (8) dans le sens opposé au sens de transfert de la matière de service depuis la chambre de remplissage (3) jusqu'au segment d'acheminement (6), pour basculer entre une position ouverte et une position fermée de l'élément de transition (7) afin de permettre, dans la position ouverte, une communication entre la chambre de remplissage (3) et le segment d'acheminement (6) et, dans la position fermée, une isolation du segment d'acheminement (6) de la chambre de remplissage (3), la chambre de remplissage (3) présentant une alimentation (9) permettant d'alimenter de l'air comprimé en tant que milieu de transport gazeux afin de transférer, dans la position ouverte de l'élément de transition (7), la matière de service alimentée dans la chambre de remplissage (3) à travers l'entrée (4) vers le segment d'acheminement (6) et afin de distribuer la matière de service à partir du segment d'acheminement (6) hors de la sortie (5), la chambre de remplissage (3) étant remplie avec la matière de service au moyen d'un milieu de transport gazeux, une ouverture d'évacuation d'air (15) étant prévue afin de décharger le milieu de transport gazeux, et un moyen de séparation (14) de la matière de service étant prévu, lequel est conçu de manière à permettre que la matière de service soit séparée du milieu de transport gazeux, de sorte que la matière de service atteint la chambre de remplissage (3) et que le milieu de transport gazeux s'échappe à travers l'ouverture d'évacuation d'air (15).

2. Dispositif (1) selon la revendication 1, **caractérisé en ce que** de l'air comprimé est alimenté en tant que premier milieu de transport gazeux dans la chambre de remplissage (3) pour transporter la matière de service dans le segment d'acheminement (6) et que de l'air comprimé est alimenté en tant que second milieu de transport gazeux dans le segment d'acheminement (3) pour transporter la matière de service hors de la sortie (5), en particulier jusqu'à une station de traitement raccordée à la sortie (5).

3. Dispositif (1) selon la revendication 2, **caractérisé en ce que** les premier et second milieux de transport gazeux sont amenés simultanément, au moins temporairement, dans la chambre de remplissage (3) ou dans le segment d'acheminement (6) dans la position ouverte de l'élément de transition (7), afin de permettre une distribution de la matière de service hors de la sortie (5) par à la fois le premier et le second milieu de transport gazeux.

4. Dispositif selon la revendication 1, **caractérisé en ce que** le moyen de séparation (14) est réalisé sous la forme d'une grille ou d'un tamis disposé dans la chambre de remplissage (3).

5. Dispositif (1) selon l'une des revendications précédentes, **caractérisé en ce que** le moyen de séparation (14) est disposé entre un segment d'alimentation (9) destiné à l'air comprimé en tant que milieu de transport gazeux et le segment d'acheminement (6), de telle sorte que le milieu de transport gazeux, au moyen duquel la matière de service est transférée, dans la position ouverte de l'élément de transition (7), depuis la chambre de remplissage (3) jusqu'au segment d'acheminement (6), s'écoule pendant l'alimentation et pendant le transfert de la matière de service à travers le moyen de séparation (14) afin de permettre le nettoyage du moyen de séparation (14) par ledit milieu de transport gazeux.

6. Dispositif (1) selon l'une des revendications précédentes, **caractérisé en ce qu'**un moyen de fermeture (16, 17, 12, 13) de l'ouverture d'évacuation d'air (15) et/ou de l'entrée (4) est prévu, le moyen de fermeture (16, 17,12,13) présentant un actionneur (13, 17) et étant conçu de telle sorte qu'il peut fermer l'ouverture d'évacuation d'air (15) et/ou l'entrée (4) en déplaçant l'actionneur (13, 17) dans le sens d'écoulement du milieu de transport gazeux ou dans le sens opposé à celui-ci.

7. Dispositif (1) selon l'une des revendications précédentes, **caractérisé en ce que** la zone inférieure de la chambre de remplissage (3) tournée vers l'élément de transition (7) est en forme d'entonnoir (24, 27) et débouche de préférence dans l'élément de transition (7).

8. Système de distribution (100) comprenant un dispositif (1) d'acheminement d'une matière de service selon l'une des revendications 1 à 7, un réservoir de stockage (29) permettant de recevoir la matière de service, le réservoir de stockage (19) étant relié au dispositif (1) par l'intermédiaire d'une conduite d'alimentation (32).

9. Système de distribution (100) selon la revendication 8, **caractérisé en ce que** le réservoir de stockage (29) présentant une chambre de stockage destinée à la matière de service est prévu pour remplir la chambre de remplissage (3) au moyen d'air comprimé en tant que milieu de transport gazeux, ladite ouverture d'évacuation d'air (15) étant raccordée à un système de conduite qui débouche dans la chambre de stockage afin de permettre une ventilation de la matière de service située dans la chambre de stockage par le milieu de transport gazeux déchargé à travers l'ouverture d'évacuation d'air (15).

10. Système de distribution (100) selon l'une des revendications 8 ou 9, **caractérisé en ce que** la chambre de remplissage (3) du dispositif (1) est remplie avec la matière de service à partir du réservoir de stockage (29) au moyen d'air comprimé en tant que milieu de transport gazeux, le dispositif (1) présentant une ouverture d'évacuation d'air (15) pour décharger le milieu de transport gazeux, et un moyen de séparation (14) de la matière de service étant prévu, lequel est conçu de manière à permettre que la matière de service soit séparée du milieu de transport gazeux, de sorte que la matière de service atteint la chambre de remplissage (3) et que le milieu de transport gazeux s'échappe à travers l'ouverture d'évacuation d'air (15), une conduite d'évacuation d'air (33) qui débouche dans le réservoir de stockage (29) étant raccordée à l'ouverture d'évacuation d'air (15).
